# EUROPÄISCHE PATENTANMELDUNG

(11) **EP 0 924 497 A1**
(43) Veröffentlichungstag der Anmeldung: **23.06.1999**
(21) Anmeldenummer: 98119358.4
(22) Anmeldetag: 14.10.1998
(51) Int. Cl.: G01G 21/24, G01G 23/00, H01M 2/10

(54) **Flache batteriebetriebene Waage**

(30) Priorität: 19.12.1997 DE 19756719
(71) Anmelder: SARTORIUS AG, 37075 Göttingen (DE)
(72) Erfinder: Schulze, Werner, 37083 Göttingen (DE); Meyer, Stefanie, 37083 Göttingen (DE); Hirche, Steffen, 37085 Göttingen (DE); Eger, Matthias, 37434 Wollbrandshausen (DE)

(57) **Zusammenfassung**

Für eine oberschalige Waage mit einem Gehäuse, mit einer Waagschale, mit einem Lastaufnehmer, der durch eine Parallelführung aus einem oberen Lenker und einem unteren Lenker mit einem gehäusefesten Systemträger verbunden ist, wobei einer der Lenker in zwei Teillenker unterteilt ist, die sich - in Aufsicht gesehen - auf beiden Seiten des ungeteilten Lenkers befinden, so daß sich die Lenker nicht überdecken, wobei weiterhin der Lastaufnehmer, die Lenker und der Systemträger ein einstückiges Teil bilden, und mit Dehnungsmeßstreifen auf mindestens einem der Lenker zur Erzeugung eines belastungsabhängigen elektrischen Signals, wird vorgeschlagen, daß das einstückige Teil (1) zwei Durchbrüche (5) für zwei Batterien aufweist, daß sich der Systemträger (2) zwischen den beiden Batteriedurchbrüchen (5) hindurch erstreckt, daß der Lastaufnehmer (4,4',4'') etwa U-förmig ausgebildet ist und die beiden Schenkel (4') des U sich seitlich neben den Batteriedurchbrüchen (5) befinden und daß die Dehnungsmeßstreifen (14) nur auf der Innenseite des ungeteilten Lenkers (6) angeordnet sind. Auf diese Weise ergibt sich eine sehr flache und kompakte Bauform mit trotzdem großer Stabilität.

## Beschreibung

Die Erfindung bezieht sich auf eine oberschalige Waage mit einem Gehäuse, mit einer Waagschale, mit einem Lastaufnehmer, der durch eine Parallelführung aus einem oberen Lenker und einem unteren Lenker mit einem gehäusefesten Systemträger verbunden ist, wobei einer der Lenker in zwei Teillenker unterteilt ist, die sich - in Aufsicht gesehen - auf beiden Seiten des ungeteilten Lenkers befinden, so daß sich die Lenker nicht überdecken, wobei weiterhin der Lastaufnehmer, die Lenker und der Systemträger ein einstückiges Teil bilden, und mit Dehnungsmeßstreifen auf mindestens einem der Lenker zur Erzeugung eines belastungsabhängigen elektrischen Signals.

Waagen dieser Art sind z.B. aus der DE-OS 44 27 088 oder - mit Ausnahme der einstückigen Ausbildung von Lastaufnehmer, Lenker und Systemträger - auch schon aus der DE-AS 20 09 858 bekannt.

Nachteilig an den bekannten Ausführungen ist, daß das Wägesystem relativ viel Platz beansprucht.

Aufgabe der Erfindung ist daher, eine Waage der eingangs genannten Art so weiterzubilden, daß sie als tragbare, batteriebetriebene Waage brauchbar wird. Insbesondere soll eine möglichst flache Bauweise erreicht werden, ohne daß die Stabilität der Waage zu sehr verringert wird.

Erfindungsgemäß wird dies dadurch erreicht, daß das einstückige Teil zwei Durchbrüche für zwei Batterien aufweist, daß sieh der Systemträger zwischen den beiden Batteriedurchbrüchen hindurch erstreckt, daß der Lastaufnehmer etwa U-förmig ausgebildet ist und die beiden Schenkel des U sich seitlich neben den Batteriedurchbrüchen befinden und daß die Dehnungsmeßstreifen nur auf der Innenseite des ungeteilten Lenkers angeordnet sind.

Durch diese Ausgestaltung des einstückigen Teils ergibt sieh eine platzsparende Anordnung: Der Systemträger befindet sich praktisch zwischen den Batterien und Teile des Lastaufnehmers sind um die Batterien herum angeordnet. Durch die Anordnung der Dehnungsmeßstreifen nur auf der Innenseite des einen Lenkers braucht die Bauhöhe der gesamten Waage kaum höher zu sein als der vertikale Abstand von oberem und unterem Lenker, da die Dehnungsmeßstreifen auf der Außenseite eines Lenkers zusammen mit ihrer Verdrahtung entfallen.

Vorteilhafte Ausgestaltungen ergeben sich aus den Unteransprüchen.

Die Erfindung wird im folgenden anhand der schematischen Figuren beschrieben. Dabei zeigt:
- Fig. 1: das einstückige Teil, das Lastaufnehmer, Lenker und Systemträger bildet, in Aufsicht,
- Fig. 2: einen vertikalen Schnitt durch das einstückige Teil aus Fig. 1 längs der gestrichelten Linie A-A in Fig. 1, durch das Gehäuseunterteil und durch die Waagschale,
- Fig. 3: einen vertikalen Schnitt durch das einstückige Teil aus Fig. 1 längs der gestrichelten Linie B-B in Fig. 1 und durch das Gehäuseunterteil,
- Fig. 4: einen vertikalen Schnitt durch das einstückige Teil aus Fig. 1 längs der gestrichelten Linie C-C, in Fig. 1 und durch das Gehäuseunterteil und
- Fig. 5: einen vertikalen Schnitt durch das einstückige Teil aus Fig. 1 längs der gestrichelten Linie D-D in Fig. 1, durch das Gehäuseunterteil und durch die Waagschale.

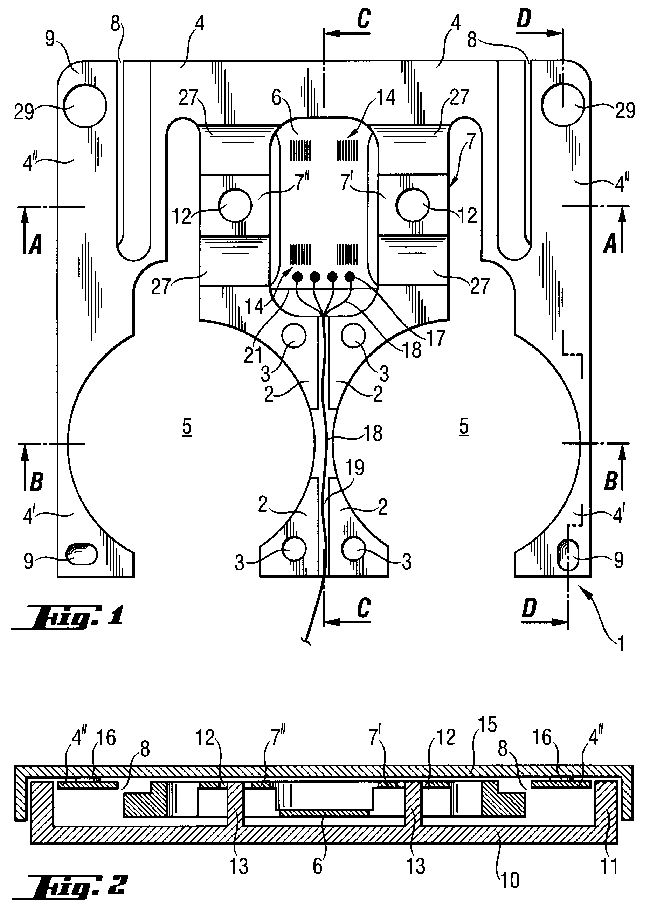

Das in Fig. 1 gezeigte einstückige Teil 1 beinhaltet einen Systemträger 2, der Löcher 3 aufweist, so daß er an das in Fig. 1 nicht gezeichnete Gehäuse z. B. angeschraubt werden kann. Weiter beinhaltet das einstückige Teil einen Lastaufnehmer 4/4', der etwa U-förmig ausgebildet ist und dessen seitliche Schenkel 4' so geformt sind, daß zwischen je einem Schenkel 4' und dem Systemträger 2 je ein kreisförmiger Hohlraum (Durchbruch) 5 zur Aufnahme je einer Batterie entsteht. Schließlich beinhaltet das einstückige Teil einen unteren Lenker 6 und einen oberen Lenker 7, wobei der obere Lenker in zwei Teillenker 7' und 7" unterteilt ist. Die beiden Lenker 6 und 7 bilden in bekannter Weise eine Parallelführung, die den Lastaufnehmer 4 in vertikaler Richtung beweglich mit dem gehäusefesten Systemträger 2 verbindet.

Die vertikale Anordnung von unterem Lenker 6 und oberem Lenker 7 erkennt man in den Figuren 2 und 4. Fig. 2 ist ein vertikaler Schnitt längs der Linie A-A in Fig. 1, Fig. 4 ist ein vertikaler Schnitt längs der Linie C-C in Fig. 1. Der untere Lenker 6 befindet sich auf der Unterseite des einstückigen Teils 1, der obere Lenker 7 auf der Oberseite, so daß der vertikale Abstand zwischen oberem und unterem Lenker bei vorgegebener Dicke des einstückigen Teiles möglichst groß ist. Die Dehnungsmeßstreifen 14 sind nur auf der Oberseite des unteren Lenkers 6 angebracht und erstrecken sich daher - genauso wie die dazugehörigen Lötstützpunkte (17 in Fig. 1 und 4) und die dazugehörige Verdrahtung (Leitungen 18 in Fig. 1 und 4) - nur in den Innenraum des einstückigen Teiles 1 hinein und vergrößern die Bauhöhe der Waage daher nicht, wie es Dehnungsmeßstreifen auf der Unterseite des unteren Lenkers 6 tun würden.

Die Waagschale 15 stützt sich im normalen Wägebetrieb an vier Stellen auf dem Lastaufnehmer 4/4'/4'' ab: In den beiden Schenkeln 4' des Lastaufnehmers befindet sich je eine Vertiefung 9' (in Fig. 1 und 5 erkennbar), in die halbkugelförmige Erhöhungen 16' auf der Unterseite der Waagschale 15 hineinragen und die Waagschale auch gegenüber seitlichen Kräften fixieren. Auf den Armen 4'' liegt die Waagschale 15 nur mit je einem runden Zwischenstück 16 (in Fig. 2 und 5 erkennbar) am Auflagepunkt 9 (in Fig. 1) auf.

Die von der Waagschale 15 auf den Lastaufnehmer 4 übertragene Kraft führt zu einer elastischen Verbiegung der Lenker 6 und 7, die wiederum durch die Dehnungsmeßstreifen 14 auf dem Lenker 6 in ein elektrisches Signal umgewandelt wird. Dieses elektrische Signal wird in einer nachgeschalteten Elektronik verstärkt, digitalisiert und in einer Anzeigeeinheit angezeigt. - Alle diese elektronischen Teile der Waage sind Stand der Technik und daher hier nicht im einzelnen erläutert.

In Fig. 2 erkennt man auch Maßnahmen zur Sicherung der Waage gegen Überlastung. Bei Überlast stützt sich die Waagschale 15 auf die Seitenwände 11 des Gehäuses 10/11 ab. Zusätzlich weist das Gehäuseunterteil (Gehäusebasis) 10 zwei Stützen (Erhöhungen) 13 auf, die sich durch Löcher (Durchbrüche) 12 im geteilten Lenker 7' und 7'' hindurch erstrecken und auch die mittleren Bereiche der Waagschale 15 bei Überlast abstützen und so ein Durchbiegen der Waagschale 15 verhindern. Entsprechende Stützen können auch an anderen Stellen des Gehäuseunterteils 10 vorgesehen sein. Weiterhin weisen die Arme 4'', die durch den Schlitz 8 vom restlichen Lastaufnehmer 4 getrennt sind, nicht die volle Höhe des restlichen einstückigen Teils 1 auf Die Arme 4" werden dadurch so weit geschwächt, daß ihre Federkonstante genauso groß ist wie die Federkonstante der Schenkel 4' des Lastaufnehmers. Dadurch senkt sich die Waagschale 15 bei mittiger Belastung verkippungsfrei. Die Arme 4'' und die Schenkel 4' sind außerdem so nachgiebig, daß die Kräfte, die beim Aufliegen der Waagschale 15 auf ihren Überlastanschlägen auf den Lastaufnehmer 4 übertragen werden, die Lenker 6 und 7 nicht überlasten. - Selbstverständlich kann die notwendige Nachgiebigkeit der Arme 4'' und der Schenkel 4' auch durch eine entsprechend schmalere Bauweise erreicht werden.

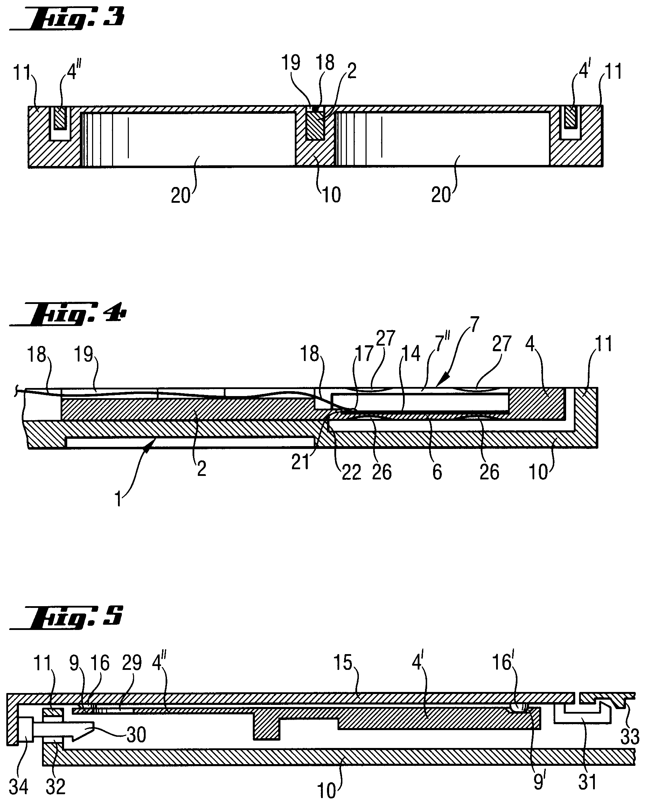

In der Fig. 3, die einen vertikalen Schnitt durch dar einstückige Teil 1 längs der gestrichelten Linie B-B in Fig. 1 und durch das Gehäuse 10/11 darstellt, erkennt man, daß auch der Schenkel 4' etwas weniger hoch als der Rest des einstückigen Teils 1 ausgeführt sein kann, um die Gleichheit der Federkonstanten der Schenkel 4' und der Arme 4'' zu erreichen und um diese Federkonstante genügend klein zu machen. Außerdem erkennt man in Fig. 3, daß das Gehäuseunterteil 10 zwei Batteriefächer 20 aufweist, die sich in die Hohlräume 5 des einstückigen Teiles 1 hinein erstrecken. Die Batteriefächer 20 liegen am Systemträger 2 an und vergrößern so dessen Steifigkeit, während sie gegenüber den Schenkeln 4' des Lastaufnehmers selbstverständlich beabstandet sind. In diese Batteriefächer 20 werden die beiden Batterien von unten her eingelegt; die Mittel zur elektrischen Kontaktierung und die Verschlußkappe für die Batteriefächer sind der Übersichtlichkeit halber nicht eingezeichnet. Die Batteriefächer 20 erhöhen nicht nur die Stabilität des Gehäuses 10/11 und des gehäusefesten Systemträgers 2, sondern sie dienen auch als großflächiger Überlastanschlag für die Waagschale 15.

Weiter erkennt man in Fig. 1, 3 und 4 eine Nut 19 im Systemträger 2, in der die Leitungen 18 zum Anschluß der Dehnungsmeßstreifen 14 verlegt sind. Dadurch erhöhen diese Zuleitungen die Bauhöhe der Waage nicht. Die Dehnungsmeßstreifen 14 können z.B. aus vier Einzel-Dehnungsmeßstreifen auf einer gemeinsamen Folie bestehen. Als Positionshilfe beim Aufkleben der Dehnungsmeßstreifen-Folie erkennt man in Fig. 1 und 4 eine kleine Stufe 21 auf der Oberseite des unteren Lenkers 6. Beim Aufkleben wird die Dehnungsmeßstreifen-Folie an diese Stufe 21 herangeschoben und dort fixiert.

Weiter erkennt man in Fig. 4, daß am unteren Lenker 6 an den Stellen 26 von unten etwas Material abgefräst oder abgeschliffen wurde, um definierte Dünnstellen am Lenker 6 zu erzeugen. Dasselbe gilt für die oberen Lenker 7' und 7'', wo an den Stellen 27 von oben her etwas Material entfernt wurde. Die Stellen 27 sind auch in Fig. 1 erkennbar. Selbstverständlich kommt man auch ohne Materialabtragungen an den Stellen 26 und 27 aus, in diesem Fall müssen nur die Lenker 6 und 7 insgesamt etwas dünner sein und wirken dann auf ihrer gesamten Länge als Biegefedern. An den Stellen 26 und 27 kann auch - falls erforderlich - in bekannter Weise eine Ecklastjustierung durch geringfügiges Abschleifen von Material erfolgen.

Schließlich erkennt man in Fig. 4 noch eine Stufe 22 im Gehäuseunterteil 10. Links von der Stufe 22 ist der Systemträger 2 direkt auf dem Gehäuseunterteil 10 befestigt, rechts von der Stufe 22 haben der Lenker 6 und der Lastaufnehmer 4 Platz zum Einfedern unter Belastung. Im Überlastfall dagegen wird der Lastaufnehmer 4 durch das Gehäuseunterteil 10 gestützt.

In Fig. 5, die einen vertikalen Schnitt durch das einstückige Teil 1 aus Fig. 1 längs der gestrichelten Linie D-D, durch das Gehäuseunterteil 10 und durch die Waagschale 15 dargestellt, erkennt man weiterhin, wie die Waagschale 15 montiert werden kann, wie sie gegen Abheben gesichert ist und wie sie für den Nichtgebrauch arretiert werden kann. Dazu weist die Waagschale zwei Klinken 30 auf, die bei der Montage in entsprechende Löcher 32 in der Seitenwand 11 hineingeschoben werden, und zwei Klinken 31, die in entsprechende Öffnungen im Gehäuse neben der Waagschale hineingeschoben werden. Die Klinken 30 und 31 haben in der in Fig. 5 gezeichneten normalen Wägestellung allseitig Spiel und sichern die Waagschale 15 gegen Abheben. Wird die Waage nicht benutzt, so kann die Waagschale 15 durch seitliches Verschieben (nach rechts in Fig, 5) arretiert werden. Dadurch werden die Klinken 30 mit ihrem Wulst 34 in den Löchern 32 fixiert, die Klinken 31 rasten hinter den Vorsprüngen 33 ein, weiter schieben sich die runden Zwischenstücke 16 über die Löcher 29 in den Armen 4'' des Lastaufnehmers und die Halbkugeln (Erhöhungen) 16' gleiten aus den Vertiefungen 9' heraus. Dadurch werden die Verbindungen zwischen der Waagschale 15 und dem Lastaufnehmer 4/4'/4'' unterbrochen und es können keine Kräfte auf den Lastaufnehmer übertragen werden. In dieser Arretierstellung wird die Waagschale durch die Klinken 31 gehalten und kann nur nach Überwinden eines Rashwiderstandes in die normale Wägestellung zurückgeschoben werden. - Selbstverständlich sind auch andere Ausgestaltungen dieser Arretierung möglich.

Das einstückige Teil 1 kann z.B. aus einem Blechstück durch Fräsungen von oben und von unten hergestellt werden. - Es kann selbstverständlich auch anders herum eingebaut werden, so daß der obere Lenker zum unteren Lenker wird und umgekehrt. Durch diese Umkehrung ändert sich an der Funktion nichts. Nur die Vertiefungen 9' zur Fixierung der Waagschale 15 müssen dann natürlich auf der anderen Seite des einstückigen Teils 1 angebracht sein.

Alle Figuren sind der Deutlichkeit halber vergrößert gezeichnet, die natürliche Größe der Waage soll etwa die Größe einer Scheckkarte erreichen.

## Patentansprüche

1. Oberschalige Waage mit einem Gehäuse, mit einer Waagschale, mit einem Lastaufnehmer, der durch eine Parallelführung aus einem oberen Lenker und einem unteren Lenker mit einem gehäusfesten Systemträger verbunden ist, wobei einer der Lenker in zwei Teillenker unterteilt ist, die sich - in Aufsicht gesehen - auf beiden Seiten des ungeteilten Lenkers befinden, so daß sich die Lenker nicht überdecken, wobei weiterhin der Lastaufnehmer, die Lenker und der Systemträger ein einstückiges Teil bilden, und mit Dehnungsmeßstreifen auf mindestens einem der Lenker zur Erzeugung eines belastungsabhängigen elektrischen Signals, dadurch gekennzeichnet, daß das einstückige Teil (1) zwei Durchbrüche (5) für zwei Batterien aufweist, daß sich der Systemträger (2) zwischen den beiden Batteriedurchbrüchen (5) hindurch erstreckt, daß der Lastaufnehmer (4,4',4'') etwa U-förmig ausgebildet ist und die beiden Schenkel (4') des U sich seitlich neben den Batteriedurchbrüchen (5) befinden und daß die Dehnungsmeßstreifen (14) nur auf der Innenseite des ungeteilten Lenkers (6) angeordnet sind.

2. Oberschalige Waage nach Anspruch 1, dadurch gekennzeichnet, daß im Lastaufnehmer (4) durch zwei Schlitze (8) zwei federnde Arme (4'') abgetrennt sind, die je einen Auflagepunkt (9) für die Waagschale (15) auf dem Lastaufnehmer (4) bilden.

3. Oberschalige Waage nach einem der Ansprüche 1 oder 2, dadurch gekennzeichnet, daß der Gehäuseboden (10) an mehreren Stellen Erhöhungen (13) aufweist, die als Überlastanschläge für die Waagschale (15) dienen.

4. Oberschalige Waage nach Anspruch 3, dadurch gekennzeichnet, daß die beiden Teillenker (7',7'') des geteilten Lenkers (7) etwa in der Mitte Durchbrüche (12) aufweisen, durch die hindurch sich zwei Erhöhungen (13) des Gehäusebodens (10) als Überlastanschläge erstrecken.

5. Oberschalige Waage nach einem der Ansprüche 1 bis 4, dadurch gekennzeichnet, daß in den Gehäuseboden (10) zwei nach unten offene Batteriefächer (20) integriert sind, die sich in die beiden Batteriedurchbrüche (5) des einstückigen Teiles (1) hinein erstrecken und daß diese Batteriefächer (20) gleichzeitig Überlastanschläge für die Waagschale (15) bilden.

6. Oberschalige Waage nach einem der Ansprüche 1 bis 5, dadurch gekennzeichnet, daß der Systemträger (2) eine Nut (19) aufweist, in der die Leitungen (18) zum Anschluß der Dehnungsmeßstreifen (14) verlegt sind.

7. Oberschalige Waage nach einem der Ansprüche 1 bis 6, dadurch gekennzeichnet, daß vier Dehnungsmeßstreifen (14) auf einer gemeinsamen Folie auf der Innenseite des ungeteilten Lenkers (6) angeordnet sind.

8. Oberschalige Waage nach einem der Ansprüche 1 bis 7, dadurch gekennzeichnet, daß der ungeteilte Lenker (6) auf seiner Innenseite eine Stufe (21) aufweist, die als Positionierhilfe beim Aufkleben der Dehnungsmeßstreifen (14) dient.

9. Oberschalige Waage nach einem der Ansprüche 1 bis 8, dadurch gekennzeichnet, daß die Elektronik der Waage und die Anzeige sich neben dem einstückigen Teil (1) befinden.

10. Oberschalige Waage nach einem der Ansprüche 1 bis 9, dadurch gekennzeichnet, daß die Waagschale (15) aus ihrer normalen Wägestellung heraus seitlich versehiebbar ist und im verschobenen Zustand am Gehäuse (10,11) fixiert ist.
